(19) **Europäisches Patentamt**
**European Patent Office**
**Office européen des brevets**

(11) **EP 4 726 631 A1**

(12) **EUROPEAN PATENT APPLICATION**

(43) Date of publication:
**15.04.2026 Bulletin 2026/16**

(21) Application number: **24206450.9**

(22) Date of filing: **14.10.2024**

(51) International Patent Classification (IPC):
*G06Q 30/018* (2023.01)    *G06Q 50/04* (2012.01)

(52) Cooperative Patent Classification (CPC):
**G06Q 30/018;** G06Q 50/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
• **Kormann, Claudius**
**67056 Ludwigshafen am Rhein (DE)**
• **Krkljus, Ivana**
**67056 Ludwigshafen am Rhein (DE)**
• **Balensiefer, Tim**
**67056 Ludwigshafen am Rhein (DE)**

(74) Representative: **BASF IP Association**
**BASF SE**
**GBI - Z078**
**67056 Ludwigshafen (DE)**

(54) **SYSTEM AND METHOD TO PRODUCE CARBON NEUTRAL PRODUCTS FROM CHEMICAL PRODUCTION NETWORKS BY USING FUEL SWITCH TECHNOLOGIES**

(57)    The present disclosure relates to the field of sustainability and, in particular, to calculating, monitoring and attributing carbon delta attributes (such as GHG savings) to select material products to improve the environmental impact of material production. The disclosure relates to methods, apparatuses and systems for generating, monitoring, and/or allocating carbon delta attributes associated with input materials provided to a fuel switch within a Scope 1 system boundary of a material production network.

FIG. 5

**Description**

TECHNICAL FIELD

The present disclosure relates to the field of sustainability and, in particular, to calculating, monitoring and/or attributing carbon delta attributes (such as GHG savings) to select material products to improve the environmental impact of material production. The disclosure relates to methods, apparatuses and systems for generating, monitoring, and/or allocating carbon delta attributes associated with input materials provided to a fuel switch within a Scope 1 system boundary of a material production network.

TECHNICAL BACKGROUND

Across the chemical industry, there is an urgent need to decarbonize. Beyond a corporation's own operations, market participants are looking for products with reduced Product Carbon Footprints (PCFs). Claiming 'CO2 neutral certified' appears to be attractive, however, making claims based on the offsetting of greenhouse gas emissions is not generally accepted when the offsetting of greenhouse gas emissions occurs outside the product's value chain.

SUMMARY OF THE INVENTION

In an aspect, the disclosure relates to a computer-implemented method for assigning a carbon delta attribute associated with a renewable input material to a chemical product, wherein the chemical product is produced by a chemical production network, wherein the chemical production network chemically converts input materials via chemical intermediates to chemical products that exit the chemical production network, the method comprising:

- providing a conventional input material to a fuel switch, wherein the fuel switch is within a Scope 1 system boundary of the chemical production network;
- providing a renewable input material to the fuel switch, wherein the renewable input material is interchangeable with the conventional input material;
- providing conventional input material data and renewable input material data to an operating system of the chemical production network;
- calculating a carbon delta attribute based on the conventional input material data and the renewable input material data;
- attributing the carbon delta attribute to a virtual balancing account;
- producing the chemical product, wherein the chemical product is associated with a chemical product identifier; and
- assigning the carbon delta attribute from the virtual balancing account to the chemical product identifier.

In another aspect, the disclosure relates to a computer-implemented method for assigning a carbon delta attribute associated with a renewable input material to a chemical product, the method comprising:

- providing a conventional input material to a fuel switch, wherein the fuel switch is within a Scope 1 system boundary of the chemical production network;
- providing a renewable input material to the fuel switch, wherein the renewable input material is interchangeable with the conventional input material;
- providing conventional input material data and renewable input material data to an operating system of the chemical production network;
- calculating a carbon delta attribute based on the conventional input material data and the renewable input material data;
- attributing the carbon delta attribute to a virtual balancing account;
- providing a chemical product identifier;
- assigning the carbon delta attribute from the virtual balancing account to the chemical product identifier.

In another aspect, the disclosure relates to computer-implemented method for assigning a carbon delta attribute associated with a renewable energy input to a chemical product, wherein the chemical product is produced by a chemical production network, wherein the chemical production network chemically converts input materials via chemical intermediates to chemical products that exit the chemical production network, the method comprising:

- providing a conventional input material to a fuel switch, wherein the fuel switch is within a Scope 1 system boundary of the chemical production network;

- providing a renewable input material to the fuel switch, wherein the renewable input material is interchangeable with the conventional input material;
- providing conventional input material data and renewable input material data to an operating system of the chemical production network;
- calculating a carbon delta attribute based on the conventional input material data and the renewable input material data;
- attributing the carbon delta attribute to a virtual balancing account;
- assigning the carbon delta attribute from the virtual balancing account to a chemical product identifier associated with the chemical product.

In another aspect, the disclosure relates to a system for assigning a carbon delta attribute associated with a renewable input material to a chemical product, wherein the chemical product is produced by a chemical production network, wherein the chemical production network chemically converts input materials via chemical intermediates to chemical products that exit the chemical production network, the system comprising:

- an input configured to receive conventional input material data and renewable input material data to an operating system of the chemical production network;
- a processor configured to (i) provide a conventional input material to a fuel switch, wherein the fuel switch is within a Scope 1 system boundary of the chemical production network (ii) provide a renewable input material to the fuel switch, wherein the renewable input material is interchangeable with the conventional input material, (iii) calculate a carbon delta attribute based on the conventional input material data and the renewable input material data, (iv) attribute the carbon delta attribute to a virtual balancing account (v) providing an identifier associated with the chemical product, and (vi) assign the carbon delta attribute from the virtual balancing account to a chemical product identifier.

In yet another aspect disclosed is a computer element, in particular a computer program product or a computer readable medium, with instructions, which when executed on one or more computing node(s) are configured to carry out the steps of any of the methods disclosed herein. In yet another aspect disclosed is a computer element, in particular a computer program product or a computer readable medium, with instructions, which when executed by a processor cause any of the apparatuses disclosed herein to perform any of the methods disclosed herein.

Disclosed is in yet another aspect the use of one or more chemical products(s) associated with assigning a carbon delta attribute associated with a renewable input material to a chemical product as provided by any of the methods disclosed herein and/or produced by a chemical production network as provided by any of the methods disclosed herein to produce at least one discrete product or at least one end product associated with a carbon delta attribute. The at least one discrete product or the at least one end product may be an intermediate or end product of a product supply chain. The at least one discrete product or the at least one end product may be based on one or more chemical products(s). The at least one discrete product or the at least one end product may be produced by discrete manufacturing. Disclosed is in yet another aspect a method for producing at least one discrete product or at least one end product associated with assigning a carbon delta attribute associated with a renewable input material to a chemical product, wherein the chemical product is produced by a chemical production network using the renewable input material as provided by any of the methods disclosed herein and/or produced by a chemical production network as provided by any of the methods disclosed herein is provided and/or used to produce the at least one discrete product or at least one end product associated with the one or more sustainability attribute(s).

In yet another aspect the present disclosure relates to a computer element with instructions, which when executed on one or more computing node(s) is configured to carry out the steps of the method(s) of the present disclosure or configured to be carried out by the apparatus(es) of the present disclosure.

Any disclosure, embodiments and examples described herein relate to the methods, the systems, apparatuses, chemical products and computer elements lined out above and below. Advantageously, the benefits provided by any of the embodiments and examples equally apply to all other embodiments and examples.

EMBODIMENTS

The public, regulators, and financial investors are increasingly concerned with the environmental impacts of chemical production processes. Major companies, in turn, have announced ambitious plans to track and manage the environmental impacts associated with the production of their products. Transparency between the participants can aid the collective improvement in showing compliance with applicable standards (which, in the case of sustainability-related standards can improve environmental impacts). The chemical industry is in a transition period. The conventional (i.e., fossil-based) product portfolio is being incrementally expanded with sustainable chemical products through the substitution of conventional input materials with sustainable input materials. The sustainable input materials are chemically identical to their conventional counterparts and only differ in their sustainability characteristic(s) and their higher prices. It is infeasible to add dedicated production infrastructure due to the inherent duplication of infrastructure and hence excess production capacity (as well as the substantial upfront investments required). An immediate full substitution of conventional input materials with sustainable input materials is also challenging because (i) there is insufficient sustainable input material(s) on the market to meet the total demand, (ii) there is insufficient and volatile demand for sustainable chemical products, and (iii) many customers are not willing to pay the higher price for sustainable products.

As a result, the existing chemical production infrastructure must be utilized for both the production of conventional chemical products and sustainable chemical products. For example, the conventional input materials may be partly replaced by sustainable input materials depending on the demand for sustainable chemical products. This enables the offering and commercialization of a sustainable product portfolio in which sustainable products are produced in-line with conventional products. In the production process, the conventional and sustainable input materials are chemically indistinguishable and inseparable.

Customer demand for products with low or neutral PCF is hindered by complicated processes and credibility concerns. In some cases, customer demand for biomass balance (BMB) products is hindered because outsiders find it difficult to trace and understand the flow of renewable, biobased or recycled raw materials through chemical production networks, especially when it comes to calculating the product PCF of the resulting products. Clearly, a GHG compensation mechanism for products is needed that is easy to understand, easy to validate and certify and still involves material processes of the producer's value chain. The present disclosure describes a surprising solution to this complicated task. The solution combines producers' ambitions to mitigate GHG with customer's ambitions to use neutral PCF materials on a journey to GHG neutrality.

According to the disclosure, a conventional input material and a (like-for-like) renewable input material may be provided to a fuel switch process (FSP) of a chemical production network. The FSP may be located within the Scope 1 boundary (e.g., as defined by the Greenhouse Gas Protocol) of the chemical production network. The FSP may replace quantities of conventional input material (e.g., incumbent petrochemical input material) with the renewable input material As is further described below, the FSP (and an associated digital system) may generate offsets (e.g., a digital credit referred to as a carbon delta attribute) based on the renewable input material provided to the fuel switch process. As discussed in greater detail below, a digital system may calculate the number of offsets generated from the FSP by determining the PCFs of the conventional and renewable raw materials (or fuels) according to, for example, the ISO 14067 standard. The digital system may assign (or allocate, link, etc.) the carbon delta attribute (representing the offsets) to a material product.

This disclosure describes the use of an FSP located within the Scope 1 of the chemical production network. Scope 1 is a concept defined by, for example, the GHG Protocol Corporate Accounting and Reporting Standard (https://ghgprotocol.org/sites/default/files/standards/ghg-protocol-revised.pdf, Page 25). The application of the Scope 1 definition provides improved data accuracy and credibility and bolsters the reliably of the process described below. The fuel switching may occur in a storage tank or in a distribution pipeline next to (before) the processing of a fuel such as naphtha, natural gas, methanol, butane diol, ammonia, hydrogen etc. The storage tank or a distribution pipeline can be called "feed-in point" or entry point. The incumbent (i.e., conventional) material (fuel) is mixed and replaced by a renewable material (fuel) of identical or similar physical properties, e. g. bionaphtha, naphtha from recycled resources, biomethane, methane from recycled resources, biomethanol, biobutane diol, green ammonia, green hydrogen, and the like. The renewable material may be from a mass balance or other chain-of-custody model such as book and claim. The renewable material (fuel) of identical or similar physical properties may be called renewable twin of the incumbent material.

Upon mixing and replacing the incumbent (or conventional input) material (fuel) with an amount q (e.g., tons) of its renewable twin in a Scope 1 process a number of offsets N(offsets) or CDAs (carbon delta attributes) is generated by using the following formula:

$$N(\text{offsets}) = q \text{ times } (PCF_{(\text{incumbent})} \text{ minus } PCF_{(\text{renewable twin})}) \qquad \text{Equation 1;}$$

where "PCF" is the product carbon footprint of the incumbent (i.e., conventional input material) and the renewable twin, respectively, calculated according to the ISO 14067 standard. Other equivalent standards such as the GHGP LCA standard (https://ghgprotocol.org/sites/default/files/standards/Product-Life-Cycle-Accounting-Reporting-Standard_041613.pdf) may also be used to calculate PCFs. Other equivalent standards may also be used provided the uptake of 1 kg $CO_2$ from the atmosphere into a material is properly counted as minus 1 kg $CO_2$ in the PCF calculation (also known as +1/-1 approach, cf. CEN EN 18027:2023, Chapter 6.2.2.3 Impact Assessment).

The PCFs may be provided by the supplier of the material (fuel) or may be provided from databases or data provid-ers as well. The term (PCF(incumbent) minus PCF(renewable twin)) may be called Delta PCF.

According to the disclosure, the number of offsets increases with the PCF difference. In particular, biobased renewable twins that are affected by an uptake of $CO_2$ from the air during biomass growth may have negative PCFs leading to high offset numbers. Here, PCFs of incumbent material (fuel) and its renewable twins solely depend on upstream processes from suppliers which may be called Scope 3.1. Offsets (or carbon delta attributes) may have the units of a number of tons of $CO_2$ equivalents. Mixing of incumbent material (fuel) and its renewable twins may consume a negligible amount of energy and hence not generate GHG. As is further described below, the renewable twin may be converted to its incumbent variant at the feed-in point to avoid double counting. All users of the mixture "incumbent plus renewable twin material (fuel)" may assume the mixture is the incumbent material only. Therefore, all calculations (e. g. PCF calculations) of products downstream of the feed-in-point are initially performed in the traditional way as if all raw materials were incumbent material. Offsets are initially stored in a digital system associated with the feed-in-point within Scope 1. The offsets are a virtualized carrier-construct called carbon delta attributes (or digital sustainability credits). The carbon delta attribute may be utilized to transfer the difference in PCF (between the conventional input material and its more sustainable twin), in-line (or parallel with) but outside of the chemical production process. Toward the end of the chemical production process (or at the point of sale), the digital carbon delta attribute may be allocated (or assigned to) a conventional chemical product to create a neutral PCF chemical product (or carbon neutral (chemical) product). Connectivity between the renewable (input) material and a product is not required.

The systems, methods, and apparatuses of the present disclosure may enable the allocation of a carbon delta attribute to chemical products. When a renewable input material is provided to a FSP within the Scope 1 of a chemical production network, a digital system of the chemical production network may generate a carbon delta attribute corresponding to Delta PCF attributable to the renewable input material. The digital system may allocate the carbon delta attribute to a virtual balancing account. When producing a chemical product, the digital system may allocate the carbon delta attribute from the virtual balancing account to the chemical product (to create a renewable product). The use of virtual balancing accounts for digital sustainability credits associated with renewable input material(s) enables a digital system to generate, track, and allocate the carbon delta attribute in line with the manufacturing of the products in an interconnected chemical production network.

The systems, methods, and apparatuses of the present disclosure may enable a high level of automation in the generation, monitoring, and allocation of carbon delta attributes for products. For example, a digital system may be able to access data stores that include input material data, process data, and utility data. The digital system may retrieve the applicable data to generate carbon delta attributes (associated with renewable input material(s)) in-line with a chemical production process. The digital system may then automatically allocate the carbon delta attribute(s) to a chemical product produced by the production process to increase the transparency of the environmental impacts of the renewable input material(s) (and/or the production process). This can help stakeholders make more informed decisions about the allocation of resources, including process inputs, which can lead to more sustainable and efficient production processes.

The systems, methods, and apparatuses of the present disclosure provide an efficient way to track carbon delta attributes in chemical processing and provide chemical products with positive environmental impact through the value chain. By using FSP(s) and virtual balancing accounts with attribution rules for balancing the carbon delta attributes associated with renewable input materials, such attributes can be efficiently assigned to chemical products produced in chemical production networks. Specifically, for chemical networks that produce one or chemical product from one or more input material(s) using one or more sustainable input material(s) and one or more FSP(s) via interconnected, connected and non-connected production chains, the use of the virtual balancing accounts with attribution rules allows for the reliable assignment of the carbon delta attributes in line with the physical setup of the chemical production network and to tailor the digital assets associated with the chemical product to the needs of customers. The virtual balancing accounts and the associated metadata structure further allows to decouple the complexity in material flow of chemical production networks while still allowing to tailor environmental impact to each chemical product. This way the environmental impact of the produced chemical product can be determined in line with the physical set up of the chemical production network and tailored to the needs of customers. Moreover, the carbon delta attribute(s) of the chemical products produced by the chemical production network can be made transparent to customers further processing the chemical products. By providing chemical product identifiers associated with at least one carbon delta attribute, the carbon delta attribute(s) and as such the digital asset attached to the chemical product can be adjusted to customer needs.

According to the disclosure, the above limitations may be addressed with a digital system (e.g., an operating system) that is configured to receive renewable input material data associated with a renewable input material. In some cases, the renewable input material data may include a digital representation of at least one sustainability attribute associated with the renewable input material. Input material data refers to digital information related to the composition, quality, process at origin and source of the input materials (e.g., raw materials or feedstocks) used in a chemical production process. This data may include information on the quantity, physical properties, process at origin and origin of the input materials. It may also include information on any impurities, contaminants, or other quality attributes. The input material data may be provided via one or more digital documents including, for example, a purchase order, a sales order, an invoice, a material safety data sheet, and the like. The vendor may provide some (or all) of the input material data via an Enterprise Resource Planning (ERP) system and/or other digital systems.

Renewable input material data may be digital information associated with the renewable input material(s). The renewable input material data may digitally specify the environmental impact of the renewable input material and/or may indicate one or more sustainability attributes of the renewable input material. The sustainability attribute may relate to fossil footprint or carbon footprint. The sustainability attribute may relate to a renewable and/or bio-based content, e.g., of the renewable input material. The sustainability attribute may include a qualitative data point relating to the type of impact. The sustainability attribute may specify a type such as a specific carbon footprint, renewable content and/or bio-based content or the like. The qualitative data point may be converted to a quantitative measure such as environmental units or balancing units (or carbon delta attribute(s)). The sustainability attribute may include a quantitative data point relating to the type of impact e.g., in view of the renewable input material, a specific carbon footprint, renewable content or bio-based content or the like. The sustainability attribute may specify a carbon footprint, renewable and/or bio-based content or the like. The sustainability attribute may include further environmental characteristics of the renewable input material. The renewable input material data may be sourced from the renewable input material vendor, a chemical product manufacturer, a sustainability data and consulting provider, and the like. A sustainability data and consulting provider refers to a company that may offer a range of services related to sustainability. These companies help businesses and organizations manage their environmental, social, and governance (ESG) risks and improve their sustainability performance.

The input material data (and/or the renewable input material data) may be received from a vendor who provides the corresponding input material. For example, the input material data may be digital data (e.g., electronic files or data structures) of a purchase order, material data safety sheet, certificate of analysis, regulatory compliance documents, an invoice, and the like. The input material data (and/or the renewable input material data) may be received from a third party (e.g., a consultant, an industry association, a certification body, a regulatory agency, and the like).

A digital representation of a sustainability attribute (and/or renewable input material data) refers to, for example, a digital file, a data structure or object in a digital system that encapsulates the information related to a specific sustainability attribute. The digital representation may include metadata that describes the attribute, such as its name, units of measure, and other relevant information. The representation may also include algorithms or formulas that calculate the value of the attribute based on relevant inputs or factors. The digital representation of a sustainability attribute may be designed to be used within a digital system, either as input to other functions or as output from them. The representation may be stored in a database or other data storage system and accessed through an application programming interface (API) or other software interface. The digital system may include software functions or modules that manipulate the digital representation of the sustainability attribute, such as aggregating data across multiple attributes or generating visualizations of the attribute's value over time.

According to the disclosure, the operating system may calculate a carbon delta attribute from the renewable input material data associated with the renewable input material. The term "carbon delta attribute" refers to a digital representation (or virtual asset) that represents the sustainability attributes of a renewable input material. The operating system may use various data structures to represent carbon delta attribute(s) including a key-value pair or a structured object such as a JSON (JavaScript Object Notation) object. The carbon delta attribute may be generated in multiple ways depending, for example, on whether the renewable input material data is obtained with a renewable input material or from a trader (other third party).

If the renewable input material data is obtained when receiving renewable input material(s), the operating system may apply a virtual production process. A virtual production process refers to receiving input material data for a sustainable input material and producing carbon delta attribute(s) (based on the renewable input material) and also "producing" conventional input material (e.g., data describing the corresponding amount and/or value of the conventional input material). The virtual production process may apply a recipe that consumes the renewable input material (as an input) and produces the carbon delta attribute(s) (e.g., as a main product) and the conventional input material (e.g., as a by-product). The operating system may define the carbon delta attribute as the main product to more easily plan demands in the production planning.

According to the disclosure, the operating system may calculate a value for the carbon delta attribute(s). The value may be calculated in various ways. For example, the operating system my receive renewable input material data associated with renewable input material provided to an FSP. The operating system may also receive input material data associated with the conventional "twin" of the renewable input material data. The operating system may calculate the number of offsets generated from the FSP by determining the PCFs of the conventional and renewable raw materials (or fuels) according to, for example, the ISO 14067 standard. The calculation is further described above with reference to Equation 1.

According to the disclosure, the operating system may allocate the carbon delta attribute(s) to a virtual balancing account. Allocating carbon delta attribute(s) to a virtual balancing account may involve several steps that ensure the proper management and tracking of the credits. For example, the operating system may first calculate the carbon delta attribute(s). The carbon delta attribute(s) may include information such as the quantity of offsets, the associated sustainability attributes, and metadata. The operating system may then allocate the carbon delta attribute(s) to the virtual balancing account, based on predefined rules or criteria. The operating system may update the virtual balancing account to reflect the new carbon delta attribute(s) allocation, adjusting the balance and maintaining a record of the allocation details. Later, when a chemical product is being produced, the operating system may retrieve the appropriate amount of carbon delta attribute(s) from the virtual balancing account and assign them to the respective product (i. e. the carbon neutral (chemical) product or neutral PCF (chemical) product). This assignment could be based on factors such as the sustainability attributes of the renewable input material(s) used and/or the sustainability attributes associated with the product. The operating system may track the assigned carbon delta attribute(s), ensuring that they are properly utilized and accounted for in reporting. This may involve deducting the assigned carbon delta attribute(s) from the virtual balancing account and updating the balance accordingly. The operating system may also generate reports or provide access to the allocated carbon delta attribute(s) for transparency and auditing purposes. Overall, the allocation of digital carbon delta attribute(s) to a virtual balancing account may involve receiving, updating, and tracking the credits, ensuring efficient management and utilization within the chemical production network.

The virtual balancing account (or digital inventory) may refer to a digital storage structure that stores data related to sustainability attributes (e.g., carbon delta attribute(s)). The account may be associated with metadata identifying the account for balancing sustainability attributes. The account may be associated with metadata identifying the sustainability attributes and/or the or carbon delta attribute(s) allocated to the account. The account may be associated with metadata identifying the production chain the account is associated with. The account may be associated with metadata identifying the input (e.g., renewable input material) or chemical product the account is associated with. The account may be part of a balancing system including multiple accounts. The account may hold carbon delta attribute(s) for transaction. Carbon delta attribute(s) may be allocated, added, deleted, withdrawn, or deducted from the account.

The at least one attribution rule may specify the attribution scheme associated with the account for balancing sustainability attributes. The at least one attribution rule may specify the attribution of carbon delta attribute(s) associated with renewable input material and the chemical production network. The at least one attribution rule may depend on a chemical product identifier, a carbon delta attribute, and/or a sustainability attribute. The at least one attribution rule may include instructions for attributing sustainability attributes from renewable input materials to at least one account for balancing sustainability attributes. The at least one attribution rule may include instructions for deducting carbon delta attribute(s) from at least one account for balancing carbon delta attribute(s). The at least one attribution rule may include instructions for attributing carbon delta attribute(s) from the account to chemical products or chemical product identifiers.

The operating system may be configured to access data related to the input material(s), the renewable input material(s)the input utilities and/or the chemical product(s) produced by the chemical production network. The operating system may be configured to convert renewable input material data used in the chemical production network (for example, provided to the FSP) to carbon delta attribute(s). The operating system may be configured to allocate the carbon delta attribute(s) to at least one virtual balancing account associated with the renewable input material (and/or the FSP). The operating system may be configured to allocate at least a part of the carbon delta attribute(s)from the at least one balancing account to the at least one chemical product. The operating system may be configured to register inbound carbon delta attribute(s) and/or to assign outbound sustainability attributes and to manage inbound allocation as well as outbound assignment.

Input material may refer to any substance or component that is used as a feedstock, raw material, intermediate, or similar element in a chemical production process. It may encompass a wide range of materials that are utilized as inputs to create or produce a desired chemical or product. These input materials may include natural resources, chemicals, compounds, or any other material that is required to undergo chemical reactions, processing, or transformation to yield the desired output.

A "fuel switch" or "fuel switch process (FSP)" refers to the ability to combine conventional input material with a like-for-like renewable input material in a chemical production process. The FSP may be located at a specific point in the network, often near the feed-in point where input materials are introduced to be within the Scope 1 system boundary of the chemical production network. The purpose of a fuel switch is to optimize the production process by selecting the most suitable fuel or energy source for a given situation. Different fuels or energy sources may have varying costs, availability, environmental impacts, and efficiency levels. By having the ability to switch between them, chemical production networks can adapt to changes in market conditions, resource availability, and regulatory requirements.

A "production site" may refer to a physical location where chemical products are manufactured and produced. A production site may include various facilities and equipment, such as reactors, distillation columns, storage tanks, and utilities like power, water, and steam. The production site may be designed to ensure efficient and safe manufacturing of chemical products and may include various processes such as raw material handling, chemical synthesis, purification, and finishing.

Fossil footprint or Product Fossil Footprint (PFF) may refer to the amount of petrochemical feedstocks (e.g., naphtha, crude oil, coal, and natural gas, or intermediates from feedstocks that, in turn, require a certain amount of naphtha, crude oil, coal, and natural gas) consumed in a production process at a manufacturing facility. PFF may be expressed as kilogram methane per kilogram (or methane equivalent).

The term carbon emission value refers to a quantitative measure of the amount of greenhouse gas (GHG) emissions, typically expressed in units of carbon dioxide equivalents ($CO_2e$), that are associated with a specific product.

Examples of a carbon emission value include carbon footprint or Product Carbon Footprint (PCF) which refer to a quantitative measure of the amount of greenhouse gases (GHG) emitted or removed in a production process at a manufacturing facility, expressed as kilogram carbon dioxide equivalent per kilogram of the specific product. The PCF can be assessed from cradle-to-gate (partial PCF) or from cradle-to-grave (total PCF). The PCF can include emissions from all stages of the product's life cycle, including raw material extraction, manufacturing, distribution, use and disposal. It may be used to assess and reduce the environmental impact of a company's products and to communicate this information to consumers. The term greenhouse gas (GHG) refers to a gas that is capable of absorbing and re-emitting infrared radiation, thereby trapping and holding heat in the atmosphere, and contributing to the greenhouse effect. The most common greenhouse gases include carbon dioxide ($CO_2$), methane ($CH_4$), nitrous oxide ($N_2O$), and fluorinated gases.

Carbon emission values such as PCF values may be represented in a structured data format, such as XML or JSON, which allows for easy exchange of PCF information between different digital systems. The digital representation of a PCF may also include metadata, such as the date of the PCF calculation, the standards or protocols used in the calculation, and any assumptions or uncertainties associated with the PCF calculation. This metadata may help to ensure transparency and accuracy in the PCF calculation and reporting process. These values can be stored as a numeric data type and can be associated with other relevant data points, such as the name of the product, the date of manufacture, and the supplier information. They can also be displayed in a user interface or dashboard as a graph, chart, or other visual representation to help users understand and compare the environmental impact of different products or processes. Additionally, the values can be integrated into digital tools and platforms to help individuals and organizations make more informed decisions around sustainability.

Sustainability data refers to data about the sustainability characteristics of a material (e.g., an input material). The sustainability data may include data such as: material numbers, PCF values, and the like. The sustainability data may be located in a data store. That data store may be a system, or database that provides the data or information to a digital system or application. It can be a file, a database, a web service, an application programming interface (API), or any other system or tool that provides data to a digital application. The data source may be queried, manipulated, and analyzed to extract insights and information. The data source can be internal or external to the system, and it can be accessed through various methods, including direct access, network access, and APIs.

The term "biogenic carbon" refers to carbon of renewable origin like agricultural, plant, animal, fungi, microorganisms, marine, or forestry materials living in a natural environment in equilibrium with the atmosphere. The term "fossil carbon" refers to carbon that is derived from non-renewable sources, such as fossil fuels like coal, oil, and natural gas.

A digital identifier is a unique code or set of characters that is assigned to a specific entity, such as a person, organization, or resource, to distinguish it from others. Digital identifiers may serve as labels or handles that enable digital systems to recognize and track entities across different contexts and applications. They can be used to retrieve or link to digital resources, such as data, documents, images, videos, or web pages, and to manage access or permissions to these resources. Digital identifiers can take various forms, such as email addresses, usernames, domain names, IP addresses, or digital certificates, hashes and the like. They can be assigned by different organizations or authorities, such as domain registrars, social media platforms, or government agencies, and can be used for different purposes, such as authentication, authorization, or identification. The use of digital identifiers may enable efficient and secure communication and data exchange among different entities.

Digital proof may refer to a cryptographic mechanism that provides verifiable evidence of the authenticity of a digital credential without revealing the underlying data. Digital proofs may be generated by combining the digital credential with a cryptographic proof, such as a digital signature or a zero-knowledge proof, to create a tamper-evident, cryptographically secure record that can be shared with others. The digital proof may include metadata about the credential, such as the issuer, the credential holder, the date of issuance, and other relevant information, as well as a cryptographic signature that verifies the integrity of the data.

A network node may refer to a device or computer that is connected to a network and is capable of sending, receiving, or forwarding data. The network node be any type of device that is connected to the network, such as a server, a router, a switch, a mobile device, an IoT device, or a personal computer. In the context of the digital credential scheme, each entity (e.g., Issuer, Holder, and Verifier) may have its own network node that may allow it to interact with a distributed ledger that stores the digital credentials. The network nodes may communicate with each other to ensure the integrity and security of the system, and to facilitate the exchange of digital credentials between the different entities.

According to the disclosure, a digital system may use sustainability data, process data, and/or utility data to generate, monitor, and allocate digital sustainability credits for products. The digital sustainability credits may be associated with a sustainability attribute of an energy input and/or an input material. For example, the digital sustainability credits may be associated with a renewable energy attribute of the input energy for a chemical process. Similarly, the digital sustainability credits may be associated with the sustainability attributes of an input material such as bio-naphtha.

Process data (or recipe or bill of material) refers to a digital record that describes the process by which one or more input materials are converted into one or more chemical products. The process data typically includes detailed information on the steps and conditions of the chemical reaction, such as the temperature, pressure, and duration of each step, as well as any catalysts, reagents, or other materials used in the process. The process data can comprise information about which by-products are obtained in which amount for one or more process step(s). Process data may be stored and managed in digital systems, such as process control systems or enterprise resource planning (ERP) systems. They may be used by operators, engineers, and other personnel involved in the production process to ensure that the process is carried out consistently and efficiently, and that the resulting products meet the required specifications and quality standards.

In an embodiment, calculating the carbon delta attribute based on the conventional input material data and the renewable input material data comprises:

- determining a carbon emission value of the conventional input material;
- determining a carbon emission value of the renewable input material; and
- calculating a difference between the carbon emission value of the conventional input material and the carbon emission value of the renewable input material.

In an embodiment, the carbon emission value of the renewable input material is a Product Carbon Footprint of the renewable input material ($PCF_{renew}$) and the carbon emission value of the conventional input material is a Product Carbon Footprint of the conventional input material ($PCF_{conv}$); and

- the difference between the carbon emission value of the conventional input material and the carbon emission value of the renewable input material is $PCF_{conv} - PCF_{renew}$.

In an embodiment, calculating the carbon delta attribute based on the conventional input material data and the renewable input material data comprises:

- determining the mass of the renewable input material ($mass_{renew}$) based on the renewable input material data; and
- multiplying the $mass_{renew}$ by $PCF_{conv} - PCF_{renew}$.

In an embodiment, calculating the carbon delta attribute based on the conventional input material data and the renewable input material data comprises:

- applying a virtual production process to produce the carbon delta attribute as a main product.

In an embodiment, assigning the carbon delta attribute from the virtual balancing account to the chemical product identifier comprises:

- producing a digital asset that specifies the chemical product with a combination of the chemical product identifier and the carbon delta attribute.

In an embodiment, the digital asset uniquely specifies the chemical product with the combination of the chemical product identifier and the carbon delta attribute.

In an embodiment, the chemical product identifier is associated with the physical entity of the chemical product, wherein the chemical product identifier is a virtual identifier uniquely linked to the chemical product.

In an embodiment, the processor configured to calculate the carbon delta attribute based on the conventional input material data and the renewable input material data comprises a processor configured to:

- determine a carbon emission value of the conventional input material,
- determine a carbon emission value of the renewable input material, and
- calculate a difference between the carbon emission value of the conventional input material and the carbon emission value of the renewable input material.

In an embodiment, the carbon emission value of the renewable input material is a Product Carbon Footprint of the renewable input material ($PCF_{renew}$) and the carbon emission value of the conventional input material is the Product Carbon Footprint of the conventional input material ($PCF_{conv}$).

In an embodiment, the difference between the carbon emission value of the conventional input material and the carbon emission value of the renewable input material is $PCF_{conv} - PCF_{renew}$.

In an embodiment, the processor configured to calculate the carbon delta attribute based on the conventional input material data and the renewable input material data comprises a processor configured to:

- determine the mass of the renewable input material ($mass_{renew}$) based on the renewable input material data; and

- multiply the mass$_{renew}$ by PCF$_{conv}$ - PCF$_{renew}$.

In an embodiment, the processor configured to calculate the carbon delta attribute based on the conventional input material data and the renewable input material data comprises a processor configured to:

- apply a virtual production process to produce the carbon delta attribute as a main product.

In an embodiment, the processor configured to assign the carbon delta attribute from the virtual balancing account to the chemical product identifier comprises a processor configured to:

- produce a digital asset that specifies the chemical product with a combination of the chemical product identifier and the carbon delta attribute.

BRIEF DESCRIPTION OF THE DRAWINGS

In the following, the present disclosure is further described with reference to the enclosed figures. The same reference numbers in the drawings and this disclosure are intended to refer to the same or like elements, components, and/or parts.

FIG. 1a-c    illustrate examples of chemical processes with multi input-multi output relations.
FIG. 2       illustrates a chemical production network including multiple chemical processes.
FIG. 3       illustrates a sub-cluster of a chemical production network including multiple chemical processes. Such sub-cluster could form a Scope 1 system boundary.
FIG. 4.      illustrates multiple sub-clusters forming a chemical production network.
FIG. 5       illustrates an example of a chemical production network 500 producing chemical products with carbon delta attributes (e.g., carbon neutral products) according to an aspect of the disclosure.
FIG. 6       illustrates the carbon emission evolution of a chemical produce over time.
FIG. 7       is a system diagram illustrating selected aspects of generating carbon delta attributes according to an aspect of the disclosure.
FIG. 8       is a system diagram illustrating selected aspects of generating carbon delta attributes according to an aspect of the disclosure.
FIG. 9       is a system diagram illustrating selected aspects of generating and allocating carbon delta attributes according to an aspect of the disclosure.
FIG. 10      is a diagram illustrating selected aspects of a system for monitoring, managing, and attributing carbon delta attributes, according to an aspect of the disclosure.
FIG. 11      is a flow diagram illustrating selected aspects of calculating and assigning carbon delta attributes, according to an aspect of the disclosure.

DETAILED DESCRIPTION

The present disclosure relates to the field of sustainability and, in particular, to calculating, monitoring and attributing carbon delta attributes (such as GHG savings) to select material products to improve the environmental impact of material production. The disclosure relates to methods, apparatuses and systems for generating, monitoring, and/or allocating carbon delta attributes associated with input materials provided to a fuel switch within a Scope 1 system boundary of a material production network.
The disclosed system and process can be applied to a wide variety of products that are made from input materials and energy inputs, such as chemical products or precursor products. The term "product" may refer to any commodity that can be sold to others at any point in the value chain. This may include end products for end users (e.g., cars, paints, toys, or medicines). This may also include goods that are typically sold to other companies for further processing (e.g., steel parts for machinery, plastic pellets for extrusion, or chemical compounds such as acrylic acid to make superabsorbents for diapers). This may also include goods that are very early in the value chain such as crude oil fractions (e.g., naphtha), agricultural products (e.g., soybeans), or purified sand for glass production.

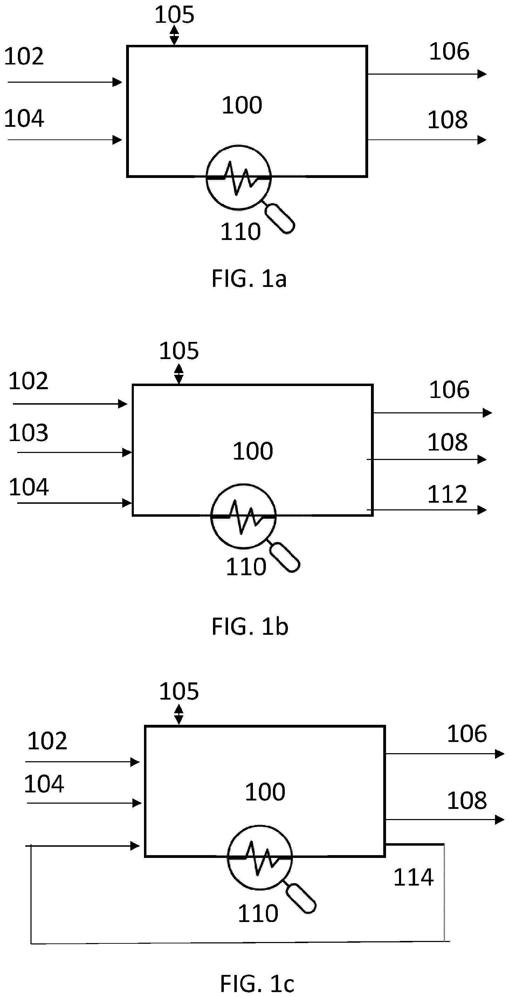

FIGs. 1a-c illustrate examples of chemical processes with multi input-multi output relations.
Chemical processes may include different process steps for producing one or more output material(s) from one or more input material(s). The chemical process may include at least one process step involving at least one chemical reaction. The chemical process may produce from multiple input materials multiple output materials. Chemical process steps include for example oxidation, reduction, hydrogenation, dehydrogenation, hydrolysis, hydration, dehydration, halogenation, nitrification, sulfonation, amination, alkylation, dealkylation, esterification, polymerization, polycondensation, catalysis, fermentation, mixing, separation, purification or the like. The process steps may be performed sequentially in time and/or space to chemically transform of input materials to output materials.

FIG. 1A illustrates input materials 102 and 104 and energy input 105 fed to the chemical process 100. Energy input 105 may renewable energy, fossil energy, or a combination thereof. Processes may also release energy, which is why the arrow next to 105 can point in either direction. The input materials 102 and 104 are chemically processed to output materials 106 and 108. The output materials 106 and 108 may include one main product and at least one by-product. In chemical reactions, the yield of one output material is typically below 100 %, because of side reactions and losses upon purifications. Hence chemical processes may produce multiple output materials. The main product may signify the product of interest and the by-product may signify the further output product that is unavoidably obtained by the chemical process. The by-product may be an intermediate which can be used as reagent in another chemical process. The chemical process including the feed of input materials and the produced quantity of output materials may be monitored by sensors 110 providing production monitoring data.

FIG. 1B illustrates input materials 102, 103, 104 fed to the chemical process 100. The input materials 102, 103, 104 are chemically processed to output materials 106, 108 as described in the context of Fig. 1a. In addition to the output materials 106, 108 a waste stream 112 may be produced by the chemical process. The waste stream may include any output material that cannot be used as reagent in another chemical process.

FIG. 1C illustrates input materials 102, 104 fed to the chemical process 100. The input materials 102, 104 are chemically processed to output materials 106, 108 as described in the context of Figs. 1a and 1b. In addition to the output materials 106, 108 a refeed stream of input material 114 may be produced and reused by the chemical process.

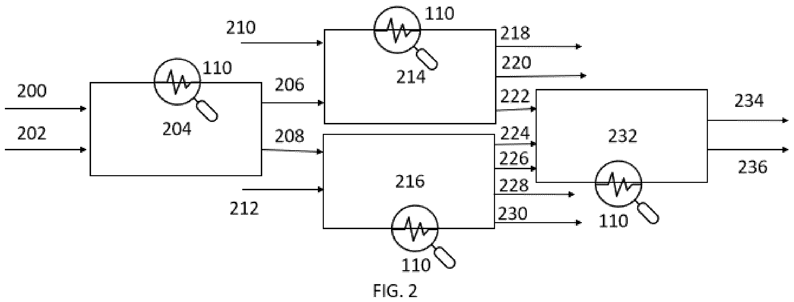

FIG. 2 illustrates a chemical production network including multiple chemical processes.

FIG. 2 illustrates the networked nature of the chemical production network. Multiple chemical processes are interlinked via their input-output material relation. For example, the output materials 206, 208 of chemical process 204 may be the input material of chemical processes 214, 216. Chemical process 214 may produce from the input materials 210 and 206 the output materials 218, 222 and waste stream 220. Output material 218 may exit the chemical production network as end products. The input material 210 may be fed to the chemical process 214 from the outside of the chemical production network. The input material 206 may be fed to the chemical process 214 from the chemical process 204 of the chemical production network. Similarly chemical process 216 may produce from the input materials 208 and 212 the output materials 224-230. Output materials 228 and 230 may exit the chemical production network as end products. Chemical process 232 may produce from the input materials 222, 224, 226 the output materials 234, 236. Output materials 234, 236 may exit the chemical production network as end products. This way the chemical production network may use interlinked or interrelated chemical processes to produce output products leaving the chemical production network. The interlinking or interrelation may include at least one intermediate of one chemical process being used as input material to one or more chemical process(es) downstream the one chemical process.

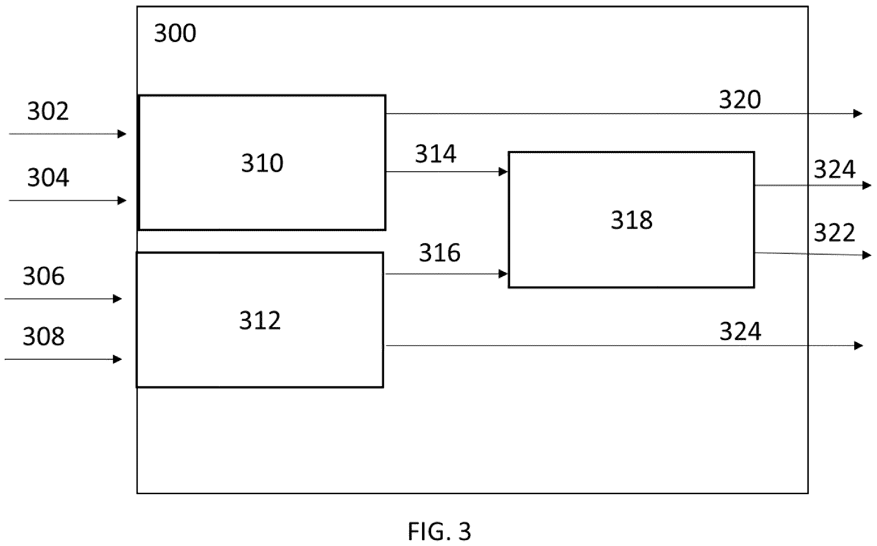

FIG. 3 illustrates a sub-cluster of a chemical production network including multiple chemical processes.

A chemical production network may include multiple plants performing chemical processes 312, 310, 318 and forming sub-clusters 300 of the chemical production network. The input material 302, 304 may be fed into chemical process 310. The input materials 306, 308 may be fed into chemical process 312. The output materials 320, 324 may be provided as end products of the subcluster 300 and exit the subcluster 300. The output materials 314 and 316 of chemical processes 310, 312 may be provided as input materials to chemical process 318. The output materials 322, 324 may be provided as end products of the subcluster 300 and exit the subcluster 300. Such sub-cluster may form a Scope 1 system boundary (e. g. as defined by the Greenhouse Gas Protocol).

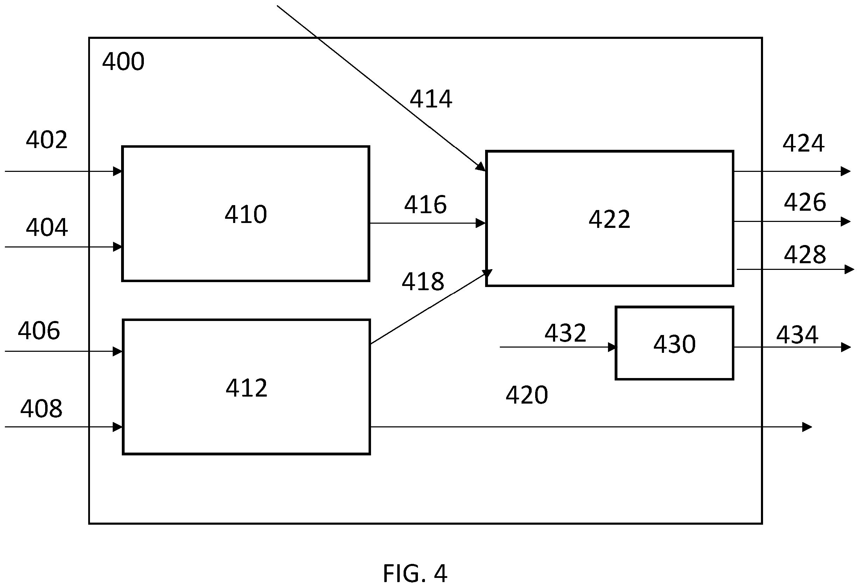

FIG. 4 illustrates multiple sub-clusters forming a chemical production network.

The chemical production network 400 may include multiple subclusters 410, 412, 422, 430. The input materials 402, 404, 406, 408 may be fed to subclusters 410, 412. The output material 416 from subcluster 410 and the output material 418 from subcluster 412 may be fed as input material to subcluster 422. Input material 432 may enter the chemical production network 400 and be fed to subcluster 430. In addition, input material 414 may enter the chemical production network 400 and be fed to subcluster 422. The output materials 420, 424, 426, 428, 434 may exit the chemical production network as end products. Sub-clusters may form Scope 1 system boundaries (e. g. as defined by the Greenhouse Gas Protocol).

As illustrated in FIGs. 1 to 4 the chemical production network 400 may include multiple chemical processes 100, which may be arranged in subclusters 410, 412, 422, 430. The chemical processes 100 or subclusters 410, 412, 422 may be connected to form a network with multiple production chains interrelated via their material flow. The chemical production network may form part of a discrete product supply chain, wherein the discrete product is produced from one or more chemical outputs or output materials proved by the chemical production network. Subcluster 430 may operate isolated from other subclusters within (chemical) production network 400.

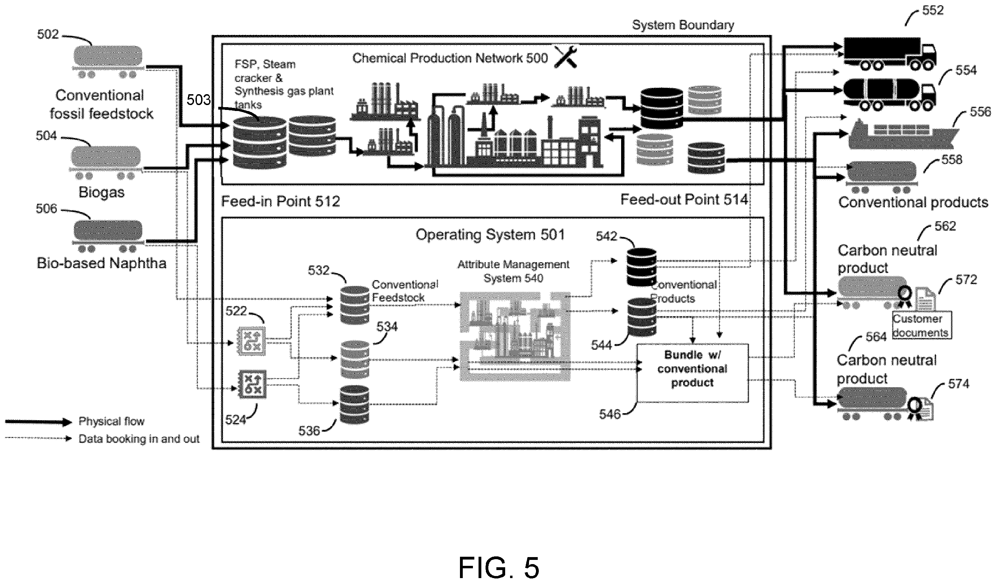

FIG. 5 illustrates an example of a chemical production network 500 producing chemical products with carbon delta attributes (e.g., carbon neutral products) according to an aspect of the disclosure. Chemical production network 500 is described above with reference to FIGs. 1-4. Production network 500 may form a Scope 1 system boundary (e. g. as defined by the Greenhouse Gas Protocol).

Operating system 501 is a digital operating system configured to collect, store, manage and interpret a wide range of production and/or business data for chemical production network 500. Operating system 501 may be part of an Enterprise Resource Planning (ERP) system. Alternatively, operating system 501 may be partly implemented in an ERP system and partly implemented in one or more additional systems which may be communicatively coupled with an ERP system. Operating system 501 may also be implemented in one or more systems outside of an ERP system.

In the illustrated embodiment, input materials 502-506 are provided to chemical production network 500 at the feed-in point (or entry point) 512. Input materials 502-506 may be from other (chemical) production networks (also known as Scope 3.1 as defined by the Greenhouse Gas Protocol). The input materials may include conventional fossil feedstock 502 (e.g., natural gas or naphtha) as well as renewable input materials 504-506. The renewable input materials may a like-for-like replacement of a conventional input material. For example, the conventional input material may be naphtha, methanol, ammonia, hydrogen, butanol. The respective corresponding (i.e., like-for-like) renewable material may be bio-naphtha, bio-methanol, green ammonia, green hydrogen, bio-butanol. After they are delivered to chemical production network 500, the conventional input materials 502, the renewable input materials 504-506, and/or energy input 508 may be used in one or more chemical production processes of chemical production network 500.

Input material data for renewable input material 504 is provided to operating system 501 at 522. Similarly, renewable input material data for renewable input material 506 is provided to operating system 501 at 524. For example, the goods receipt (and/or a BOM and/or a chemical production recipe) including the input material data for the renewable input material(s) may be electronically provided to operating system 501 when, for example, renewable input material 504 and/or renewable input material 506 is delivered to chemical production network 500.

Operating system 501 may receive input material data 522-524 through an interface to a local or a remote database or an ERP system, in particular its supply chain module, or any computing system or apparatus, such as a centralized or decentralized computing system or apparatus including processing and storage. The input material data for each input material may hence be gathered from an ERP system or any computing system or apparatus, such as a centralized or decentralized computing system or apparatus including processing and storage. In some cases, the input material data of each input material is gathered through an interface to more than one database. It therefore may be necessary to convert the information retrieved from different databases into a single format to allow further processing. In particular, the input material data obtained from databases may be attributed to the input material via the identification of an input material in the database that has to be translated to the identification of the input material used in the process according to the present disclosure. Similarly, the input material data obtained from databases may be attributed to the input material input via the identification of an input material in the database that has to be translated to the identification of the input material of the process data used in the process according to the present disclosure.

Operating system 501 may calculate a carbon delta attribute associated with renewable input material(s) 504-506. The carbon delta attribute may be a digital representation of the carbon offsets generated within the scope 1 boundary of system 500 using an FSP. The digital representation may encapsulate various factors such as an amount of renewable energy and/or a reduction of greenhouse gas emissions. It may include specific details regarding the sources of the renewable input materials, such as biogas or bio-naphtha, as well as the corresponding quantity, value, and/or other metadata. The calculation of the carbon delta attribute may involve multiple steps including, for example: (1) extracting the applicable data from the input material data, (2) validating the extracted data, (3) converting the data into a structured formatted (e.g., JSON or XML) for easier manipulation, and (4) attribute calculation (e.g., as determined by the amount of renewable input material and the differences in the PCFs between a conventional input material and the like-for-like renewable input material).

According to the disclosure, operating system 501 may apply a virtual production step to calculate the digital sustainability credit. Virtual production refers to receiving input material data for a renewable input material and applying a production recipe to the input material data to produce the digital sustainability credit (and a corresponding amount of conventional input material). For example, operating system 501 may initiate a virtual production process when it receives renewable input material data for renewable input material 506. The virtual production process may parse the input material data and apply a corresponding recipe. For example, the virtual production process may determine an amount of credit (e.g., associated with the input material data), cost associated with the renewable input material, amount of renewable input material, and the like.

In an aspect of the disclosure, renewable input materials 504-506 may be used in a chemical production process that produces one or more chemical products. For example, operating system 501 may parse process data for the chemical production process and determine that it will create a chemical product. Operating system 501 may then create a virtual balancing account associated with the chemical product and/or renewable input material. For example, if input material 506 is an input to the process, then operating system 501 may create virtual balancing account 536. Operating system 501 may convert the input sustainability attribute(s) of renewable input material 506 to carbon delta attributes (e.g., corresponding to the differences in PCF between conventional input material 502 and like-for-like twin 506 both of which may be provided to FSP 503) and apply an allocation rule (e.g., renewable input material, type of sustainability attribute, expiration date, and/or other predefined allocation rule) to allocate the carbon delta attribute(s) to virtual balancing account 536. In an aspect of the disclosure, connectivity between the renewable input material and a product is not required.

Similarly, if renewable input material 504 is an input to the process, operating system 501 may convert the input sustainability attribute of renewable input material 504 to carbon delta attribute (e.g., corresponding to the amount of renewable input material and the differences in the PCFs between a conventional input material and the like-for-like renewable input material) and allocate the carbon delta attribute(s) to virtual balancing accounts 534.

Virtual balancing account (or digital inventory) 534 may determine and track both the amount (e.g., volume and/or mass) and the value of renewable input material 504. For example, operating system 501 may parse input material data 522 to determine the amount of renewable input material(s) 504 that was received. Operating system 501 may then credit virtual balancing account (or digital inventory) 534 with carbon delta attribute(s) calculated from the amount of renewable input materials that were received.

Similarly, virtual balancing account (or digital inventory) 536 may determine and track both the amount (e.g., volume and/or mass) and the value of input material 506. For example, operating system 501 may parse input material data 524 to determine the amount of renewable input material 506 that was received. Operating system 501 may then credit virtual balancing account (or digital inventory) 536 with carbon delta attribute(s) calculated from the amount of renewable input energy that was received.

Operating system 501 includes amalgamating system 546 to create chemical products by combining carbon delta attribute(s) with conventional products (i. e. the carbon neutral (chemical) products or neutral PCF (chemical) products). For example, operating system 501 processes an order for a product 552-564. If the customer purchased a conventional chemical product 552-558, operating system 501 may process the purchase using conventional product digital inventory 542-544.

If, however, the customer purchased a carbon neutral chemical product, operating system 501 may direct amalgamating system 546 to combine carbon delta attribute(s) from one or both of digital inventories (or virtual balancing accounts) 534-536 with corresponding conventional products from one or both of digital inventories 542-544. Amalgamating system 546 may generate a digital asset (which may or may not be incorporated into another record such as a BOM and/or sales record) 572-574 that defines (or specifies) a carbon neutral product from the combination of carbon delta attributes (or balancing units) and conventional product(s). For example, amalgamating system 546 may create a carbon neutral product by combining conventional product 544 with carbon delta attribute(s) from digital inventory 536 as shown by 574. Similarly, amalgamating system 546 may create a carbon neutral product by combining conventional product 542 with carbon delta attribute(s) from digital inventory 534 as shown by 572. Thus, operating system 501 enables chemical production network 500 to efficiently create multiple carbon neutral products from multiple input materials that are combined with fossil input materials and/or fossil energy in a large interconnected chemical production network.

Operating system 501 may be configured to provide an identifier (e.g., a decentral identifier) associated with a physical entity of a produced chemical product (or other chemical product). For example, operating system 501, may be configured to link the decentral identifier to a physical identifier of the chemical product. Operating system 501 may be configured to assign the decentral identifier to the physical identifier connected to the chemical product. The production operating apparatus may be configured to assign the decentral identifier to the physical identifier physically connected to the chemical product.

The decentral identifier may relate to data associated with at least one chemical product produced by the chemical production network, wherein the one or more carbon delta attribute(s) associated with the at least one chemical product are derived from one or more sustainability attribute(s) associated with the input material(s). The decentral identifier may relate to any identifier uniquely associated with the chemical product. The decentral identifier may be associated with the physical entity of the chemical product. The decentral identifier may refer to a single batch of the chemical product. The decentral identifier may be associated with a group of chemical product(s). The identifier may refer to multiple physical entities of the chemical product(s). The decentral identifier may be associated with continuous or semi-continuous stream of the chemical product. The identifier may refer to a stream of the chemical product e.g. over a certain time period.

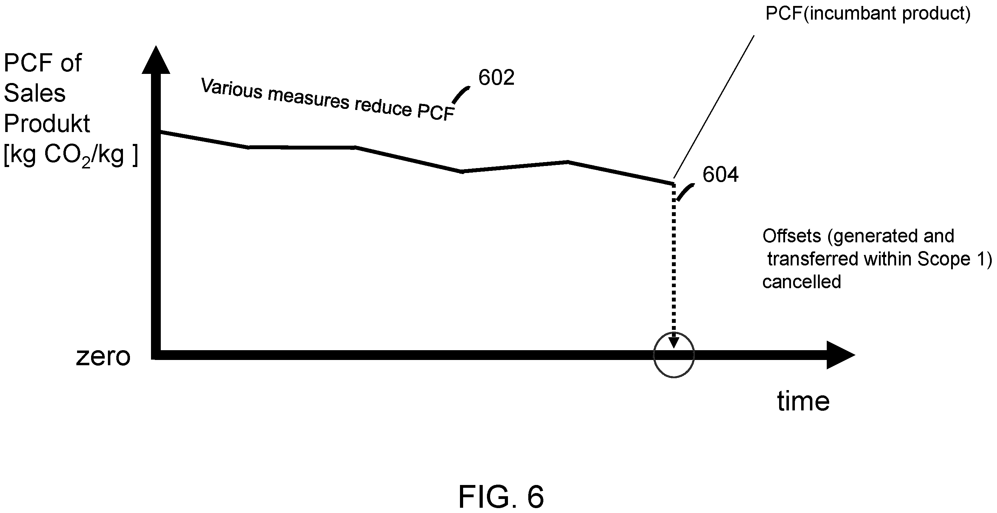

FIG. 6 illustrates the PCF evolution of incumbent sales products over time. Within the Scope 1 boundary of a chemical production network (e.g., chemical production network 500, shown in FIG. 5), an operator may apply various measures, such as process and efficiency improvements, purchasing low PCF raw materials and utilities to gradually reduce the PCF of its incumbent products, as shown by 602. According to an aspect of the disclosure, the operator can invoke a fuel switch process (FSP) within his Scope 1 to generate offsets (i.e., carbon delta attribute(s)) and use the offsets for customer specific demand of carbon neutral products as shown by 604.

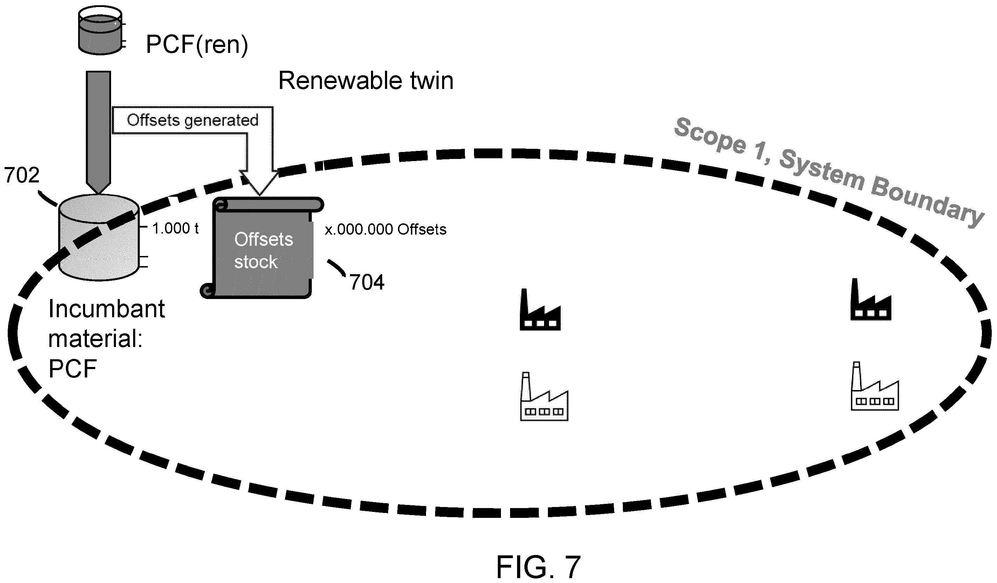

FIG. 7 illustrates the location and functioning of the fuel switch process (FSP), according to an aspect of the disclosure. FSP 702 may be a mixing tank, device or pipeline located within the Scope 1 (preferred), or it is directly located at the border of Scope 1 of a chemical production network (e.g., chemical production network 500, shown in FIG. 5), connected by pipeline or shared fuel tank. Fuel switching means mixing of the renewable, more sustainable material (fuel) to a tank of incumbent material (fuel) while separating the reduced GHG impact (e.g., as illustrated by the carbon delta attribute(s) 704) of the more sustainable material (fuel). Double counting is avoided by adjusting the PCF(ren) to the PCF of the incumbent material.

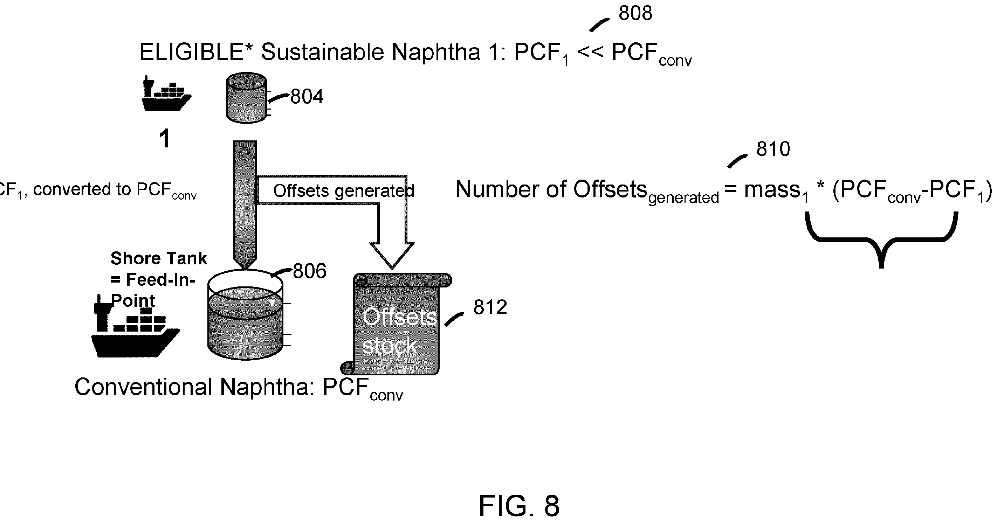

FIG. 8 illustrates generating carbon delta attribute(s), according to an aspect of the disclosure. Renewable input material 804 is provided to FSP 806. In some aspects of the disclosure, renewable input material 804 may meet certain eligibility criteria (e.g., as defined per public sustainability convention, e. g. RED II, post consumer recyclate (ISO 14021) derived, etc.). The renewable input material has a PCF that is much lower than the PCF of the conventional material as shown by 808. Once the renewable input material is fed into FSP 806, its PCF is "converted" (e.g., treated as) the same PCF as its conventional twin. Carbon delta attribute(s) are generated according to Equation 1 as shown by 810. The carbon delta attributes are allocated to virtual balancing account 812.

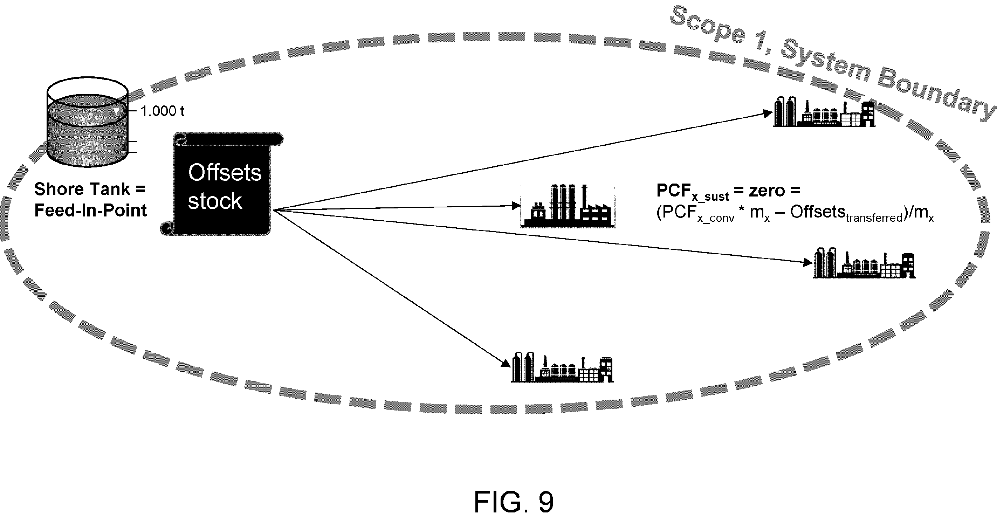

FIG. 9 illustrates the allocation of carbon delta attribute(s) to a carbon neutral product, according to an aspect of the invention. When a quantity $m_x$ (e.g., in tons) of a sales product are to be produced and sold as a carbon neutral product, a number of offsets (allocated carbon delta attributes) needs to be transferred to the process of production (feed-out point, within Scope 1, cf. 514 of FIG. 5) according to following formula:

$$\text{PCF}_{x\_sust} = (\text{PCF}_{x\_conv} \text{ times } m_x - \text{Offsets}_{transferred})/m_x = \textbf{zero}$$

$$\rightarrow \text{Offsets}_{transferred} = \text{PCF}_{x\_conv} \text{ times } m_x. \hspace{3cm} \text{Equation 2}$$

Alternatively, the target value of "zero" may be adjusted to a value other than zero to produce products with offsets (i.e., allocated carbon delta attribute(s)) that reduce the sales product's PCF to a value other than zero.

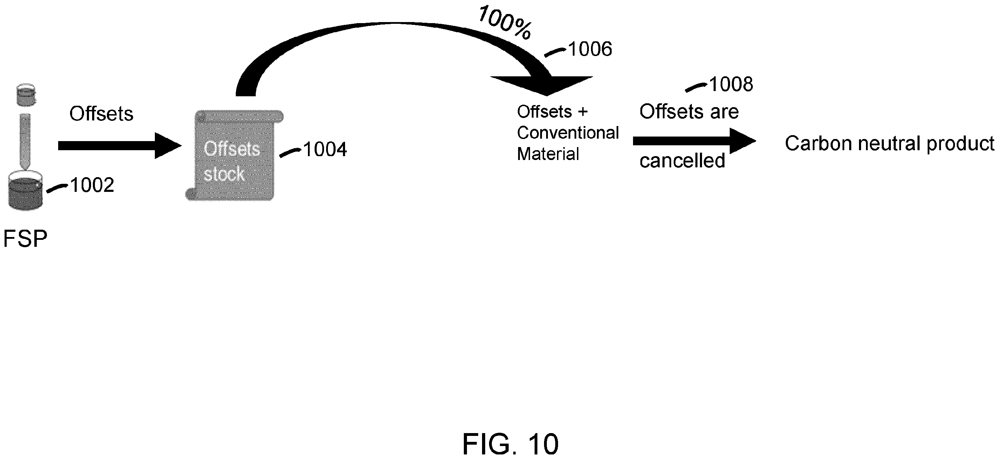

FIG. 10 illustrates the allocation of carbon delta attribute(s) to a carbon neutral product, according to an aspect of the invention. A digital system (e.g., operating system 501, shown in FIG. 5) associated with FSP 1002 generates carbon delta attributes and allocates them to virtual balancing account 1004. The digital system may then allocate the carbon delta attributes to a conventional product to produce a carbon neutral product as shown by 1006. The carbon delta attributes that are assigned to the carbon neutral product are cancelled (e.g., deducted from) in virtual balancing account 1004 as shown by 1008. Usually, 100% of calculated carbon delta attributes are allocated and cancelled. Upon customer request or in order to meet certain certification standards higher percentages (exceeding 100%) may be allocated and cancelled.

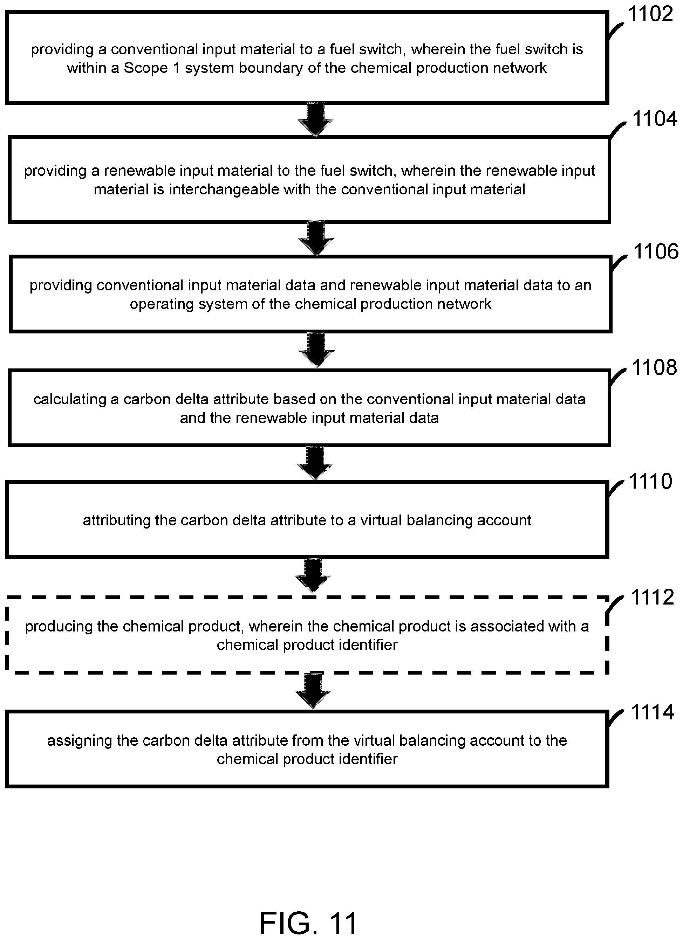

FIG. 11 is a flow diagram illustrating selected aspects of calculating and assigning carbon delta attributes, according to an aspect of the disclosure.

Conventional input material may be provided to a fuel switch (e.g., FSP 503, shown in FIG. 5) as shown by 1102. The fuel switch may be within the Scope 1 system boundary of the chemical production network (e.g., chemical production network 500, shown in FIG. 5). In addition, renewable input material may be provided to the fuel switch as shown by 1104. The renewable input material may be interchangeable with the conventional input (i.e., they may be like-for-like).

Operating system 501 may receive input material data and renewable input material data at 1106. The input material data may include a digital representation of at least one sustainability attribute associated with the input material (e.g., the PCF of the input material data). Similarly, the renewable input material data may include a digital representation of at least one sustainability attribute associated with the renewable input material (e.g., the PCF of the renewable input material data). The Input material data and/or the renewable input material data refers to digital information related to the composition, quality, and source of the input materials (e.g., raw materials or feedstocks) used in a chemical production process. This data may include information on the quantity, physical properties, and origin of the input materials. It may also include information on any impurities, contaminants, or other quality attributes. The input material data may be provided via one or more digital documents including, for example, a purchase order, a sales order, an invoice, a material safety data sheet, and the like. The vendor may provide some (or all) of the input material data via an Enterprise Resource Planning (ERP) system and/or other digital systems. The input material data may be received from a vendor who provides the corresponding input material. For example, the input material data may be digital data (e.g., electronic files or data structures) of a purchase order, material data safety sheet, certificate of analysis, regulatory compliance documents, an invoice, and the like. The input material data may be received from a third party (e.g., a consultant, an industry association, a certification body, a regulatory agency, and the like). Alternatively, the input material data may also be received via a sustainability certificate (e.g., from a sustainability certificate registry).

Operating system 501 may calculate a carbon delta attribute associated with the differences in PCFs of the input material and the renewable input material at 1108. The carbon delta attribute may be a digital representation of the carbon offsets generated by adding the renewable input material to the fuel switch. The digital representation may encapsulate various factors such as an amount of material and/or a reduction of greenhouse gas emissions. It may include specific details regarding the sources of renewable input material, as well as the corresponding amounts, and/or value/cost of the sustainability material. The calculation of the carbon delta attribute(s) may involve multiple steps including, for example: (1) extracting the applicable data from the input material data, (2) validating the extracted data, (3) converting the data into a structured formatted (e.g., JSON or XML) for easier manipulation, and (4) attribute calculation (e.g., as determined by Equation 1).

Referring to 1110, the operating system may be configured to allocate the carbon delta attribute(s) to a virtual balancing account. For example, the operating system (e.g., operating system 501, shown in FIG. 5) may include a virtual balancing account assignment function (not shown) configured to generate and manage virtual balancing accounts (534-536, shown in FIG. 5). The operating system may instruct the virtual balancing account assignment function to generate (and/or assign) one or more virtual balancing accounts (not shown). According to the disclosure, the operating system attributes the carbon delta attribute(s) to a virtual balancing account, according to one or more attribution rules (e.g., material type, sustainability attribute type, and the like).

Referring to 1112, according to the disclosure, the chemical production network (e.g., chemical production network 500, shown in FIG. 5) produces the chemical product. Chemical processes and chemical production networks are described above with reference to FIGs. 1-5.

Referring to 1114, the digital system (e.g., operating system 501, shown in FIG. 5) assigns the carbon delta attribute from the virtual balancing account to the chemical product identifier (or digital asset) associated with a chemical product. The identifier (or digital asset) associated with the chemical product may include one or more identifier(s) relating to the chemical product. The identifier may relate to a chemical product class, a specific chemical product and/or properties of the chemical product such as environmental properties. The identifier may include a unique number uniquely associated with the chemical product class, the specific chemical product and/or the properties of the chemical product. The identifier may include one or more specific identifier(s), such as chemical product class identifier, specific chemical product identifier and/or property of the chemical product identifier. Such specific identifier(s) may be uniquely linked to the first chemical product. For example, one or more property identifier(s) may be uniquely linked to the chemical product identifier. The chemical product identifier may be uniquely linked to the specific chemical product. This way the chemical product can be uniquely linked to a digital twin of the chemical product specifying specific properties of the chemical product. The identifier associated with the chemical product may include an identifier relating to the carbon delta attribute(s). The identifier may include a carbon delta attribute(s) identifier, such as a unique attribute identifier assignable to chemical products. The carbon delta attribute identifier may relate to the specific chemical product.

The identifier (or digital asset) may include, be linked to or be related to a batch and/or order number, such as a unique batch and/or order number. The batch number may be linked to the physical entity of produced chemical product batches. The order number may be linked to the transaction specifying the shipment of the chemical product batch from the producer of the chemical product to the user further processing the chemical product.

Assigning or attributing at least one carbon delta attribute to the chemical product may include the linking of an input material identifier or a chemical product identifier with the carbon delta attribute (or digital sustainability credit). The input material identifier or the chemical product identifier may be associated with the physical entity of the input material or the chemical product, respectively. This way the virtual identifier of a material may be uniquely linked to the physical material. Such linking may include a physical or virtual link of identifiers uniquely associated with the physical material. For physical linking a tag or code may be physically connected to the material, e.g. by printing a QR code on the packaging. For virtual linking different identifiers associated with the physical material may be linked. For example, an order number, a batch number, LOT number or a combination thereof may be linked. Thus, according to the disclosure, a digital system may monitor, manage, and allocate a carbon delta attribute(s) that is generated with an FSP and that is allocated to a chemical product.

The present disclosure further relates to a non-transitory computer readable data medium storing a computer program including instructions for executing steps of the method according to the present invention. Computer readable data medium include hard drives, for example on a server, USB storage device, CD, DVD or Blue-ray discs. The computer program may contain all functionalities and data required for execution of the method according to the present invention or it may provide interfaces to have parts of the method processed on remote systems, for example on a cloud system.

The present invention further relates to a system or apparatus for determining the sustainability attribute of a product produced in a production process of a production plant. Unless explicitly described differently hereafter, the description relating to the method also applies to the system or apparatus. The system or apparatus can be a computing device, for example a computer, tablet, or smartphone, or a distributed computing system or apparatus or apparatus such as a cloud system. Often the computing device has a network connection in order to communicate with other computing devices, such as servers or a cloud network.

The present disclosure has been described in conjunction with preferred embodiments and examples as well. However, other variations can be understood and effected by those persons skilled in the art and practicing the claimed invention, from the studies of the drawings, this disclosure and the claims.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

As used herein "determining" also includes "initiating or causing to determine", "generating" also includes "initiating and/or causing to generate" and "providing" also includes "initiating or causing to determine, generate, select, send and/or receive". "initiating or causing to perform an action" includes any processing signal that triggers a computing node or device to perform the respective action.

In the claims as well as in the description the word "comprising" or "including" or similar wording does not exclude other elements or steps and shall not be construed limiting to the elements or steps lined out. The indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation or further elements may be included.

Providing in the scope of this disclosure may include any interface configured to provide data. This may include an application programming interface, a human-machine interface such as a display and/or a software module interface. Providing may include communication of data or submission of data to the interface, in particular display to a user or use of the data by the receiving entity.

Any disclosure and embodiments described herein relate to methods, systems, apparatuses, devices, chemicals, materials, computer program elements lined out above and vice versa. Advantageously, the benefits provided by any of the embodiments and examples equally apply to all other embodiments and examples and vice versa.

All terms and definitions used herein are understood broadly and have their general meaning.

Any disclosure and embodiments described herein are mere examples for implementing the method, the system or application device disclosed herein and shall not be considered limiting.

## Claims

1. A computer-implemented method for assigning a carbon delta attribute associated with a renewable input material to a chemical product, wherein the chemical product is produced by a chemical production network using the renewable input material, wherein the chemical production network chemically converts input materials via chemical intermediates to chemical products that exit the chemical production network, the method comprising:

   - providing a conventional input material to a fuel switch, wherein the fuel switch is within a Scope 1 system boundary of the chemical production network;
   - providing the renewable input material to the fuel switch, wherein the renewable input material is interchangeable with the conventional input material;
   - providing conventional input material data and renewable input material data to an operating system of the chemical production network;
   - calculating a carbon delta attribute based on the conventional input material data and the renewable input material data;
   - attributing the carbon delta attribute to a virtual balancing account;
   - producing the chemical product, wherein the chemical product is associated with a chemical product identifier; and
   - assigning the carbon delta attribute from the virtual balancing account to the chemical product identifier.

2. The computer-implemented method of claim 1, wherein calculating the carbon delta attribute based on the conventional input material data and the renewable input material data comprises:

   - determining a carbon emission value of the conventional input material;
   - determining a carbon emission value of the renewable input material; and
   - calculating a difference between the carbon emission value of the conventional input material and the carbon emission value of the renewable input material.

3. The computer-implemented method of claim 2,

   - wherein the carbon emission value of the renewable input material is a Product Carbon Footprint of the renewable input material (PCFrenew);
   - wherein the carbon emission value of the conventional input material is a Product Carbon Footprint of the conventional input material (PCFconv); and
   - wherein the difference between the carbon emission value of the conventional input material and the carbon emission value of the renewable input material is PCFconv - PCFrenew.

4. The computer-implemented method of claim 3, wherein calculating the carbon delta attribute based on the conventional input material data and the renewable input material data comprises:

- determining the mass of the renewable input material (massrenew) based on the renewable input material data; and
- multiplying the massrenew by PCFconv - PCFrenew.

5. The computer-implemented method of any of the preceding claims, wherein calculating the carbon delta attribute based on the conventional input material data and the renewable input material data comprises:

- applying a virtual production process to produce the carbon delta attribute as a main product.

6. The computer-implemented method of any of the preceding claims, wherein assigning the carbon delta attribute from the virtual balancing account to the chemical product identifier comprises:

- producing a digital asset that specifies the chemical product with a combination of the chemical product identifier and the carbon delta attribute.

7. The computer-implemented method of claim 6, wherein the digital asset uniquely specifies the chemical product with the combination of the chemical product identifier and the carbon delta attribute.

8. The computer-implemented method of claim 7, wherein the chemical product identifier is associated with the physical entity of the chemical product, wherein the chemical product identifier is a virtual identifier uniquely linked to the chemical product.

9. A non-transitory computer readable data medium storing a computer program including instructions for executing steps of the method according to any of the preceding claims.

10. A system for assigning a carbon delta attribute associated with a renewable input material to a chemical product, wherein the chemical product is produced by a chemical production network, wherein the chemical production network chemically converts input materials via chemical intermediates to chemical products that exit the chemical production network, the system comprising:

- an input configured to receive conventional input material data and renewable input material data to an operating system of the chemical production network;
- a processor configured to (i) provide the conventional input material to a fuel switch, wherein the fuel switch is within a Scope 1 system boundary of the chemical production network (ii) provide the renewable input material to the fuel switch, wherein the renewable input material is interchangeable with the conventional input material, (iii) calculate a carbon delta attribute based on the conventional input material data and the renewable input material data, (iv) attribute the carbon delta attribute to a virtual balancing account (v) providing an identifier associated with the chemical product, and (vi) assign the carbon delta attribute from the virtual balancing account to a chemical product identifier.

11. The system according to claim 10, wherein the processor configured to calculate the carbon delta attribute based on the conventional input material data and the renewable input material data comprises a processor configured to:

- determine a carbon emission value of the conventional input material,
- determine a carbon emission value of the renewable input material, and
- calculate a difference between the carbon emission value of the conventional input material and the carbon emission value of the renewable input material.

12. The system according to claim 11,

- wherein the carbon emission value of the renewable input material is a Product Carbon Footprint of the renewable input material (PCFrenew) and the carbon emission value of the conventional input material is a Product Carbon Footprint of the conventional input material (PCFconv); and
- wherein the difference between the carbon emission value of the conventional input material and the carbon emission value of the renewable input material is PCFconv - PCFrenew.

13. The system according to claim 12, wherein the processor configured to calculate the carbon delta attribute based on the conventional input material data and the renewable input material data comprises a processor configured to:

   - determine the mass of the renewable input material (massrenew) based on the renewable input material data; and
   - multiply the massrenew by (PCFconv - PCFrenew).

14. The system according to any of the preceding claims, wherein the processor configured to calculate the carbon delta attribute based on the conventional input material data and the renewable input material data comprises a processor configured to:

   - apply a virtual production process to produce the carbon delta attribute as a main product.

15. The system according to any of the previous claims, wherein the processor configured to assign the carbon delta attribute from the virtual balancing account to the chemical product identifier comprises a processor configured to:

   - produce a digital asset that specifies the chemical product with a combination of the chemical product identifier and the carbon delta attribute.

105

102 →

104 →

100

110

FIG. 1a

→ 106

→ 108

105

102 →

103 →

104 →

100

110

FIG. 1b

→ 106

→ 108

→ 112

105

102 →

104 →

100

110

114

FIG. 1c

→ 106

→ 108

FIG. 2

EP 4 726 631 A1

FIG. 3

FIG. 4

FIG. 5

EP 4 726 631 A1

FIG. 6

PCF(ren)

Renewable twin

Offsets generated

Scope 1, System Boundary

702

1.000 t

Offsets stock

x.000.000 Offsets

704

Incumbant material: PCF

FIG. 7

EP 4 726 631 A1

ELIGIBLE* Sustainable Naphtha 1: $PCF_1 \ll PCF_{conv}$ — 808

— 804

1

$F_1$, converted to $PCF_{conv}$

Offsets generated

Number of $Offsets_{generated} = mass_1 * (PCF_{conv} - PCF_1)$ — 810

**Shore Tank = Feed-In-Point**

—806

Offsets stock — 812

Conventional Naphtha: $PCF_{conv}$

FIG. 8

$PCF_{x\_sust}$ = zero = $(PCF_{x\_conv} * m_x - Offsets_{transferred})/m_x$

FIG. 9

FIG. 10

providing a conventional input material to a fuel switch, wherein the fuel switch is within a Scope 1 system boundary of the chemical production network  1102

providing a renewable input material to the fuel switch, wherein the renewable input material is interchangeable with the conventional input material  1104

providing conventional input material data and renewable input material data to an operating system of the chemical production network  1106

calculating a carbon delta attribute based on the conventional input material data and the renewable input material data  1108

attributing the carbon delta attribute to a virtual balancing account  1110

producing the chemical product, wherein the chemical product is associated with a chemical product identifier  1112

assigning the carbon delta attribute from the virtual balancing account to the chemical product identifier  1114

FIG. 11

# EUROPEAN SEARCH REPORT

**Application Number**

EP 24 20 6450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/112013 A2 (BASF SE [DE]) 22 June 2023 (2023-06-22) <br> * page 9, line 12 - line 16 * <br> * page 10, line 15 - line 16 * <br> * page 12, line 16 * <br> * page 20, line 23 - line 29 * <br> * page 28, line 21 - line 30 * <br> * page 30, line 22 - page 31, line 27 * <br> * page 37, line 18 - page 38, line 15 * <br> * page 40, line 9 - line 17 * <br> * page 44, line 4 - page 47, line 33 * <br> * page 49, line 22 - page 51, line 22 * <br> * page 54, line 11 - line 20 * <br> * page 57, line 31 - page 58, line 23 * <br> * page 60, line 12 - line 16 * <br> * page 69, line 27 - line 37 * <br> * page 71, line 19 - line 28 * <br> * page 72, line 4 - line 8 * <br> ----- | 1-15 | INV. <br> G06Q30/018 <br><br> ADD. <br> G06Q50/04 |
| A | Krüger Christian ET AL: "Biomass Balance: An Innovative and Complementary Method for Using Biomass as Feedstock in the Chemical Industry : From Science to Innovation" In: "Designing Sustainable Technologies, Products and Policies : From Science to Innovation", 1 January 2018 (2018-01-01), Springer International Publishing, Cham, XP093123985, ISBN: 978-3-319-66981-6 pages 101-107, DOI: 10.1007/978-3-319-66981-6_12, Retrieved from the Internet: URL:http://link.springer.com/content/pdf/10.1007/978-3-319-66981-6_12> * the whole document * ----- | 1-15 | **TECHNICAL FIELDS SEARCHED (IPC)** <br><br> G06Q |

-/--

The present search report has been drawn up for all claims

| Place of search | Date of completion of the search | Examiner |
|---|---|---|
| Munich | 27 March 2025 | Komnios, Ioannis |

Europäisches
Patentamt

European
Patent Office

Office européen
des brevets

## EUROPEAN SEARCH REPORT

**Application Number**

EP 24 20 6450

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/140793 A1 (MADIGAN CONOR F [US]) 2 May 2024 (2024-05-02) * paragraph [0011] * * paragraph [0096] * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 27 March 2025 | Komnios, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6450

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| WO 2023112013 A2 | 22-06-2023 | NONE | |
| US 2024140793 A1 | 02-05-2024 | NONE | |

EPO FORM P0459

For more details about this annex : see Official Journal of the European Patent Office, No. 12/82